# EUROPÄISCHE PATENTSCHRIFT

(11) **EP 2 310 700 B1**
(45) Veröffentlichungstag und Bekanntmachung des Hinweises auf die Patenterteilung: **28.05.2014**
(21) Anmeldenummer: 09795915.9
(22) Anmeldetag: 14.12.2009
(51) Int. Cl.: F16C 17/03, F16C 17/06, F16C 17/14, F16C 33/26

(54) **LAGERKISSEN FÜR EIN SEGMENTIERTES, MEDIENGESCHMIERTES GLEITLAGER**
PILLOW BLOCK FOR A SEGMENTED, MEDIA-LUBRICATED PLAIN BEARING
COUSSIN DE PALIER POUR PALIER LISSE SEGMENTÉ, À LUBRIFICATION PAR DES FLUIDES

(30) Priorität: 15.12.2008 DE 102008061912
(43) Veröffentlichungstag der Anmeldung: 20.04.2011
(73) Patentinhaber: Voith Patent GmbH, 89522 Heidenheim (DE)
(72) Erfinder: HOLSTEIN, Benjamin, 89518 Heidenheim (DE); PERNER, Norman, 89233 Neu-Ulm (DE); SPIEGEL, Klaus, 40627 Düsseldorf (DE)
(74) Vertreter: Dr. Weitzel & Partner
(86) Internationale Anmeldenummer: PCT/EP2009/008935
(87) Internationale Veröffentlichungsnummer: WO 2010/075951

(56) Entgegenhaltungen:
- DE-U- 6 928 401
- JP-A- 10 089 346
- US-A- 2 898 165
- US-A- 4 290 656
- US-A- 4 515 486

## Beschreibung

Die Erfindung betrifft ein Lagerkissen für ein segmentiertes, mediengeschmiertes Gleitlager, insbesondere ein wassergeschmiertes, seewassertaugliches Gleitlager.

Gleitlager mit hinreichender Seewasserfestigkeit sind für Schiffsfahrzeuge, beispielsweise zur Ausbildung von Stevenrohrlagern oder zur Lagerung umlaufender Einheiten von Unterwasserkraftwerken, wie Gezeitenkraftwerken, notwendig. Dabei haben sich hydrodynamische Gleitlager mit Wasserschmierung als hinreichend standfest erwiesen. Diese sind bevorzugt so gestaltet, dass eine Vielzahl von Lagerkissen mit einem, ein Elastomer umfassenden Gleitbelag gegen eine Gegenlauffläche mit einer größeren Härte und einem höheren E-Modul geführt ist. Durch diese Weich-Hart-Paarung entsteht ein robustes, deformationsunempfindliches Lager, das bei der Verwendung von Umgebungswasser als Schmiermedium sedimentfest ist.

Insbesondere zur Ausbildung großbauender Lager der voranstehend genannten Art ist wenigstens eine der Lagergleitflächen segmentiert ausgebildet. Hierzu wird exemplarisch auf die DE 28 02 098 A1 verwiesen. Dabei werden Lagerkissen verwendet, die einen Grundkörper aufweisen, der den eigentlichen Gleitbelag trägt, welcher wiederum aus einem für die Anwendung geeigneten Gleitlagerwerkstoff besteht. Hierzu wird ein möglichst elastisches Material gewählt, um eine gute Anpassung an die Gegenlauffläche sicherzustellen. Dies führt zu der Schwierigkeit, dass nicht für alle Betriebsbedingungen ein definierter Lagerspaltabstand im Gleitlager aufrechterhalten werden kann.

US 4 290 656 A1 offenbart ein dem Oberbegriff entsprechendes Lagerkissen für ein segmentiertes, mediumgeschmiertes Gleitlager mit einem Grundkörper, der eine Auflagefläche aufweist.

Die Auflagefläche trägt einen Gleitbelag, der ein Polymermaterial umfasst. Die Figuren 8, 8A und 9, 9A zeigen ein Lagerkissen mit einer in Drehrichtung stetig ansteigenden Grundkörperkontur. Der Gleitbelag ist lediglich auf einer Seite des Lagers ausgedünnt.

Der Erfindung liegt die Aufgabe zugrunde, ein Lagerkissen für ein Gleitlager anzugeben, das auch für unterschiedliche Drehrichtungen hohe Lagerkräfte aufnehmen kann.

Diese Aufgabe wird durch die Merkmale von Anspruch 1 gelöst.

Erfindungsgemäß liegt ein zentraler, in Form einer Stufe angehobener Tragbereich vor, sodass an den Rändern des Lagers der Grundkörper durch eine Eindrehung zurückspringt, um im äußeren Bereich eine größere Materialstärke für den Gleitbelag zu erhalten. Dadurch wird die konkave Einfederung beim bidirektionalen Betrieb des Lagers verringert. An der im Hinblick auf eine bestimmte Drehrichtung vorderen Seite ist die höhere seitliche Elastizität des Lagerkissens vorteilhaft für den Einzug des Schmiermediums, gefolgt von einem größere elastische Gegenkräfte erzeugenden Zentralbereich.

Zusätzlich haben die Erfinder erkannt, dass der stufenförmige Rücksprung auch an der auslaufenden Seite des Lagers vorteilhaft ist. Dabei ist beim Betrieb in eine bestimmte Richtung von asymmetrischen Druckprofilen im Lagerspalt auszugehen, die insbesondere in den Figuren 8A und 9A der o.z. Entgegenhaltung US 4 290 656 A1 illustriert sind. Für ein Lagerkissen, das für den bidirektionalen Betrieb geeignet ist, muss eine symmetrische Grundstruktur vorliegen, die eine direkte Anpassung an ein asymmetrisches Druckprofil nicht erlaubt. Wird ein angehobener Bereich in Form eines ebenen, zentral angelegten Sockels am Grundkörper vorgesehen, ermöglicht die sprunghafte Änderung der Materialstärke des Gleitbelags an der Ausgangsseite ein lokal steiles Einfedern, nach dem die eigentlichen Lagerkräfte aufnehmende zentralen Bereich, die zu einer Glättung des Druckprofils im Tragbereich des Lagers führt. Dabei haben die Erfinder erkannt, dass durch diesen Rücksprung des Grundkörpers der Gleitbelag für den bidirektionalen Betrieb insgesamt einer geringen Deformation unterliegt und die Schmiermittelführung und die Druckverteilung im angehobenen, ebenen Sockelbereich vergleichmäßigt werden kann.

Die Erfindung ist anhand von Ausführungsbeispielen und Figurendarstellungen genauer erläutert. In diesen ist im Einzelnen Folgendes dargestellt:
- Figur 1: zeigt einen räumlichen Schnitt durch ein erfindungsgemäßes Lagerkissen.
- Figur 2: zeigt eine Querschnittsansicht des Lagerkissens aus Figur 1.
- Figur 3: zeigt eine alternative Gestaltung eines erfindungsgemäßen Lagerkissens im Querschnitt.
- Figur 4: zeigt eine weitere Ausgestaltungsalternative des erfindungsgemäßen Lagerkissens als Querschnittsansicht.

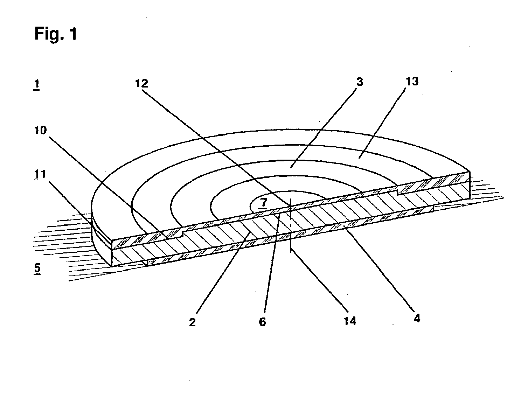

Figur 1 zeigt einen räumlichen Schnitt für ein Ausführungsbeispiel eines erfindungsgemäßen Lagerkissens 1. Für die dargestellte Ausgestaltung der Erfindung ist ein kreisförmiges Lagerkissen 1 mit einer ebenen Gleitfläche gewählt.

Im Rahmen der Erfindung sind von der Kreiskontur abweichende Lagerkissen 1, beispielsweise mit einer rechteckigen, elliptischen oder dreieckförmigen Gestaltungen denkbar. Des Weiteren kann das Profil der Gleitfläche 13 von der dargestellten, im unbelasteten Zustand ebenen Ausführung abweichen. Dabei ist es möglich, dass für eine ebenfalls ebene Gegenlauffläche das Lagerkissen 1 einen an der Gleitfläche 13 konvex gewölbten Verlauf aufweist und folglich ballig ausgebildet ist. Ferner kann der Verlauf der Gleitfläche 13 an eine nicht ebene Kontur an einer Gegenlauffläche angepasst sein. Dies wird insbesondere im Fall eines Radialgleitlagers zur Führung einer Maschinenwelle oder dergleichen der Fall sein.

Erfindungsgemäß weist der Gleitbelag 3 eine örtlich variierende Materialstärke in Richtung der Flächennormalen der Gleitfläche 13 auf. Dies wird für die vorliegende Ausgestaltung dadurch bewirkt, dass das Oberflächenprofil der Auflagefläche 10 des Grundkörpers 2, auf dem der Gleitbelag 3 angeordnet ist, nicht eben ausgebildet ist, sondern zum Flächenzentrum 12 hin, das für die vorliegende Ausgestaltung mit dem Durchstoßpunkt der Zentralachse 14 zusammenfällt, einen angehobenen Bereich in Form eines Sockels 6 aufweist.

Für die dargestellte Ausgestaltung weist dieser Sockel 6 einen Durchmesser auf, der 50 % - 70 % und besonders bevorzugt etwa 60 % des Durchmessers des Grundkörpers 2 entspricht. Für eine nicht kreisförmige Ausgestaltung des Grundkörpers 2 (nicht dargestellt), ist die Erstreckung des Sockels 6, der für diesen Fall ebenfalls nicht kreisförmig gewählt sein wird, entsprechend relativ zu den Querabmessungen des Grundkörpers 2 anzupassen.

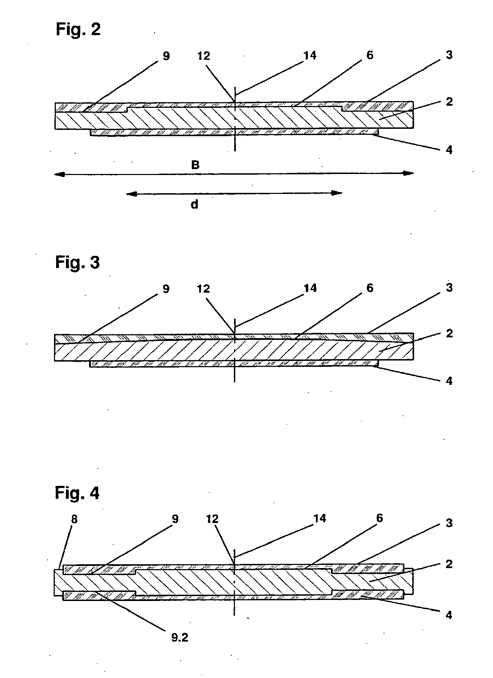

Durch das Profil der Auflagefläche 10 des Grundkörpers 2 entsteht in einem Zentralbereich 7 um das Flächenzentrum 12 ein Abschnitt des Gleitbelags 3 mit verringerter Materialstärke. Für das vorliegende Ausgestaltungsbeispiel ist die Materialstärke des Gleitbelags 3 im Bereich des Sockels 6 so gewählt, dass diese 50 % der Materialstärke des Gleitbelags 3 außerhalb des Bereichs des Sockels 6, der sich zum Rand 11 des Grundkörpers 2 hin erstreckt, entspricht. Dies ist aus der Querschnittansicht von Figur 2 ersichtlich, wobei die Quererstreckung des Sockels 6 mit d bezeichnet ist und vorliegend 60 % des Durchmessers B des gesamten Grundkörpers 2 einnimmt.

Eine alternative, nicht erfindungsgemäße Ausgestaltung ist in Figur 3 skizziert. Dabei wird anstatt eines Sockels 6 wenigstens ein Teil, vorliegend die gesamte Auflagefläche 10, konvex geformt. Es entsteht wiederum ein bezüglich der Materialstärke ausgedünnter Gleitbelag im Bereich um die Zentralachse 14.

Eine weitere Ausgestaltungsalternative ist in Figur 4 dargestellt. Dabei ist auf der Oberseite des Grundkörpers 2, die die Auflagefläche 10 bildet, eine Eindrehung 9 vorgesehen. Durch diese Maßnahme entsteht ein Rand 8, der den Gleitbelag 3 seitlich abstützt sowie der in Zusammenhang mit Figur 2 erläuterte Sockel 6, der zu einer verringerten Materialstärke des Gleitbelags 3 im zentralen Bereich des Lagerkissens 1 führt.

Der Gleitbelag 3 umfasst ein Polymermaterial und bevorzugt ein Elastomer. Mögliche Werkstoffe für den Gleitbelag mit hinreichender Trockenlauffestigkeit sind Buna® und Orkot®. Dabei bildet der Gleitbelag mit der im Einzelnen nicht dargestellten Gegenlauffläche eine Weich-Hart-Paarung, wobei für eine bevorzugte Gestaltung das E-Modul des Gleitbelags 3 etwa 1 % des E-Moduls für die Gegenlaufflächen ist. Dabei können die Gegenlaufflächen beispielsweise Stahlteile sein. Eine solche Materialpaarung erlaubt die Ausbildung eines wassergeschmierten Gleitlagers, das die Verwendung von Seewasser als Schmierstoff verträgt. Entsprechend kann das erfindungsgemäße Lagerkissen für ein mediengeschmiertes Gleitlager verwendet werden, das zur Lagerung der umlaufenden Teile eines Unterwasserkraftwerks oder zur Ausbildung eines Stevenrohrlagers der Propellerwelle eines Wasserfahrzeugs geeignet ist.

Ausgehend von der voranstehend erläuterten Weich-Hart-Paarung des Lagers verhindert die erfindungsgemäße Ausgestaltung des Lagerkissens eine konkave Einfederung im Zentralbereich der Gleitfläche 13 während des Betriebs aufgrund des Schmiermitteldrucks. Entsprechend tritt keine unerwünschte Lagerspalterweiterung in diesem Bereich auf. Der Grundkörper 2, welcher gegenüber dem Gleitbelag 3 ein höheres E-Modul aufweist und beispielsweise aus Stahl, Bronze, Glas oder Holz oder einem Kompositmaterial aufgebaut ist, verhindert die genannte Einfederung im zentralen Bereich. In dem weniger belasteten Randbereich des Gleitbelags 3 kann eine höhere Materialstärke gewählt werden, um eine möglichst elastische Laufschicht zu erhalten, die sich gut an die Kontur einer im Betrieb möglicherweise einer Deformation unterliegenden Gegenlauffläche anpasst. Entsprechend kann die Materialstärke des Schmiermittelfilms möglichst konstant gehalten werden, sodass ein großes Gleitlager mit hoher Tragfähigkeit entsteht.

Der Gleitbelag wird bevorzugt durch Kleben, Anvulkanisieren oder dergleichen stoffschlüssig mit der Auflagefläche 10 des Grundkörpers 2 verbunden. Zusätzlich oder alternativ kann der Gleitbelag 3 am Grundkörper an einzelnen Aufhängepunkten, beispielsweise mittels einer Schraubverbindung, befestigt sein oder die Auflagefläche 10 des Grundkörpers 2 weist ein Muster von Aufnahmen auf, in die der Gleitbelag 3 zur sicheren Befestigung eingreift. Zusätzlich kann der in Figur 4 dargestellte Rand 8 als seitliche Begrenzung des Gleitbelags 3 vorgesehen sein.

Unterhalb des Grundkörpers 2 des Lagerkissens 1 befindet sich für eine vorteilhafte Ausgestaltung eine elastische Abstützung 4. Diese kann bevorzugt flächig ausgebildet sein und besteht für eine einfache Konstruktion aus dem Material des Gleitbelags, das in einer solchermaßen hinreichenden Stärke zwischen dem Grundkörper 2 und dem Auflager 5 vorgesehen ist, dass eine gewisse Verkippung des Lagerkissens 1 gegen das Auflager 5 möglich ist. Eine besonders bevorzugte Ausgestaltung für die elastische Abstützung 4 ist in Figur 4 dargestellt. Dabei wird die Unterseite des Grundkörpers 2 mit einer unteren Eindrehung 9.2 versehen, sodass die Materialstärke der flächig ausgebildeten elastischen Abstützung 4 in den Randbereichen des Grundkörpers 2 verglichen mit dem zentralen Bereich größer ist.

Weitere Ausgestaltungen der Erfindung im Rahmen der nachfolgenden Schutzansprüche sind denkbar. Dabei ist es insbesondere möglich, die Gleitfläche 13 durchbrochen auszugestalten und mit Nuten zur Verbesserung der Schmiermittelführung oder einer rückseitigen Schmiermittelzufuhr zu versehen.

### Bezugszeichenliste

- 1: Lagerkissen
- 2: Grundkörper
- 3: Gleitbelag
- 4: elastische Abstützung
- 5: Auflager
- 6: Sockel
- 7: Zentralbereich
- 8: Rand
- 9: Eindrehung
- 9.2: untere Eindrehung
- 10: Auflagefläche
- 11: Rand
- 12: Flächenzentrum
- 13: Gleitfläche
- 14: Zentralachse

## Patentansprüche

1. Lagerkissen (1) für ein segmentiertes, mediengeschmiertes Gleitlager mit einem eine Auflagefläche (10) umfassenden Grundkörper (2);
einem auf der Auflagefläche (10) angeordneten, eine Gleitfläche (13) bildenden Gleitbelag (3), der ein Polymermaterial umfasst und dem ein Flächenzentrum (12) zugeordnet ist; wobei
die Materialstärke des Gleitbelags (3) in Richtung der Flächennormalen der Gleitfläche (13) im unbelasteten Zustand am Rand (11) der Gleitfläche größer ist als am Flächenzentrum (12), wobei die örtlichen Materialstärkenunterschiede des Gleitbelags durch das Oberflächenprofil der Auflagefläche (10) des Grundkörpers (2) gebildet werden; **dadurch gekennzeichnet, dass** die Auflagefläche (10) des Grundkörpers (2) im Bereich des Flächenzentrums (12) einen angehobenen Bereich in Form eines ebenen Sockels (6) mit einer Querabmessung aufweist, die 50 % - 70 % der Querabmessung des Grundkörpers in die entsprechende Richtung annimmt.

2. Lagerkissen (1) nach Anspruch 1, **dadurch gekennzeichnet, dass** die Gleitfläche (13) im unbelasteten Zustand ein an die Gegengleitfläche des Gleitlagers angepasstes Profil aufweist.

3. Lagerkissen nach einem der vorausgehenden Ansprüche, **dadurch gekennzeichnet, dass** der Grundkörper (2) auf der Seite der Auflagefläche (10) im Randbereich eine Eindrehung (9.1) aufweist, sodass ein den der Gleitbelag seitlich begrenzender Rand (8) und der Sockel im Bereich des Flächenzentrums (12) der Auflagefläche (10) entsteht.

4. Lagerkissen (1) nach einem der vorausgehenden Ansprüche, **dadurch gekennzeichnet, dass** der Sockel (6) einen kreisförmigen Querschnitt mit dem Flächenzentrum (12) als Mittelpunkt und einem Radius von 50 - 70 % des kleinsten Abstands vom Flächenzentrum (12) zum Rand (11) aufweist.

5. Lagerkissen (1) nach einem der vorausgehenden Ansprüche, **dadurch gekennzeichnet, dass** der Gleitbelag (3) aus einem Elastomer besteht.

6. Lagerkissen (1) nach einem der vorausgehenden Ansprüche, **dadurch gekennzeichnet, dass** der Gleitbelag (3) eine geringere Härte aufweist als der Grundkörper (2).

7. Lagerkissen nach einem der vorausgehenden Ansprüche, **dadurch gekennzeichnet, dass** das Lagerkissen (1) ferner eine elastische Abstützung (4) zur Anlage an ein Auflager (5) umfasst.

8. Lagerkissen nach Anspruch 7, **dadurch gekennzeichnet, dass** die elastische Abstützung (4) aus dem Material des Gleitbelags (3) besteht.

9. Lagerkissen (1) nach einem der Ansprüche 7 oder 8, **dadurch gekennzeichnet, dass** die elastische Abstützung in Richtung des Rands des Grundkörpers (11) im Vergleich zum Bereich um die Zentralachse (14) eine größere Dicke aufweist.

10. Lagerkissen (1) nach einem der vorausgehenden Ansprüche, **dadurch gekennzeichnet, dass** der Grundkörper (2) auf der Oberseite im Randbereich eine Eindrehung (9) und auf der Unterseite im Randbereich eine untere Eindrehung (9.2) aufweist, wobei in diesen Bereichen der Gleitbelag (3) und die elastische Abstützung (4) im Vergleich zu den angrenzenden Bereichen eine größere Dicke aufweisen.

## Claims

1. A pillow block (1) for a segmented, media-lubricated plain bearing, comprising a base body (2) comprising a bearing surface (10);
a sliding lining (3) which is arranged on the bearing surface (10), forms a sliding surface (13), comprises a polymer material and is associated with a centre (12) of the surface; the material thickness of the sliding lining (3) is larger in the direction of the surface normals of the sliding surface (13) in the unloaded state at the edge (11) of the sliding surface than in the centre (12) of the surface, with the local differences in material thickness of the sliding lining being formed by the surface profile of the bearing surface (10) of the base body (2); **characterized in that**
the bearing surface (10) of the base body (2) having a convex profile or an elevated region in form of a planar base (6) in the region of the centre (12) of the surface with a transverse dimension which assumes 50% to 70% of the transverse dimension of the base body in the respective direction.

2. A pillow block (1) according to claim 1, **characterized in that** in the unloaded state the sliding surface (13) has a profile adjusted to the mating sliding surface of the plain bearing.

3. A pillow block according to one of the preceding claims, **characterized in that** the base body (2) has a turned groove (9.1) on the side of the bearing surface (10) in the boundary region, so that an edge (8) laterally delimiting the sliding lining and the base are obtained in the region of the centre (12) of the bearing surface (10).

4. A pillow block (1) according to claim 3, **characterized in that** the base (6) has a circular cross section with the centre (12) of the surface as the central point and a radius of 50 to 70% of the smallest distance of the centre (12) of the surface to the edge (11).

5. A pillow block (1) according to one of the preceding claims, **characterized in that** the sliding lining (3) consists of an elastomer.

6. A pillow block (1) according to one of the preceding claims, **characterized in that** the sliding lining (3) has a lower hardness than the base body (2).

7. A pillow block (1) according to one of the preceding claims, **characterized in that** the pillow block (1) further comprises an elastic support (4) for contact on a bearing (5).

8. A pillow block according to claim 7, **characterized in that** the elastic support (4) consists of the material of the sliding lining (3).

9. A pillow block (1) according to one of the claims 7 or 8, **characterized in that** the elastic support in the direction of the edge of the base body (11) has a larger thickness in comparison with the region around the central axis (14).

10. A pillow block (1) according to one of the preceding claims, **characterized in that** the base body (2) has a turned groove (9) on the upper side in the boundary region and a bottom turned groove (9.2) on the bottom side in the boundary region, with the sliding lining (3) and the elastic support (4) having in these regions a larger thickness in comparison with the adjacent regions.

## Revendications

1. Coussin de palier (1) pour palier de glissement segmenté, lubrifié par fluide, présentant un corps de base (2) comprenant une surface d'appui (10) ;
une garniture de glissement (3) formant une surface de glissement (13) et disposée sur la surface d'appui (10), qui comprend un matériau polymère et à laquelle garniture un centre de surface (12) est affectée ; où l'épaisseur de matériau (3) dans le sens des normales de surface de la surface de glissement (13) à l'état non-contraint est plus grande au bord (11) de la surface de glissement qu'au centre de surface (12), où les différences d'épaisseur de matériau locales de la garniture de glissement résultent du profil de la surface d'appui (10) du corps de base (2), **caractérisé en ce que** la surface d'appui (10) du corps de base (2) présente dans la zone du centre de surface (12) une zone surélevée sous forme de socle plan (6) avec une cote transversale égale à 50% - 70% de la cote transversale du corps de base dans la direction correspondante.

2. Coussin de palier (1) selon la revendication 1, **caractérisé en ce que** la surface de glissement (13) présente à l'état non-contraint un profil adapté à la surface de glissement opposée du palier de glissement.

3. Coussin de palier selon l'une quelconque des revendications précédentes, **caractérisé en ce que** le corps de base (2) présente une gorge sur le côté de la surface d'appui (10) dans la zone limitrophe de sorte que l'on obtient un bord (8) limitant latéralement la garniture de glissement et un socle dans la zone du centre de surface (12) de la surface d'appui (10).

4. Coussin de palier (1) selon la revendication 3, **caractérisé en ce que** le socle présente une section transversale avec le centre de surface (12) faisant office de centre et présente un rayon de 50% - 70% de la plus petite distance par rapport au centre de surface (12) vers le bord (11).

5. Coussin de palier (1) selon l'une quelconque des revendications précédentes, **caractérisé en ce que** la garniture de glissement (3) se compose d'un élastomère.

6. Coussin de palier (1) selon l'une quelconque des revendications précédentes, **caractérisé en ce que** la garniture de glissement (3) présente une dureté moindre que le corps de base (2).

7. Coussin de palier selon l'une quelconque des revendications précédentes, **caractérisée en ce que** le coussin de palier (1) comporte en outre un support élastique (4) pour s'appuyer contre un coussinet (5).

8. Coussin de palier selon la revendication 7, **caractérisé en ce que** le support élastique (4) se compose du matériau de la garniture de glissement (3).

9. Coussin de palier (1) selon l'une des revendications 7 ou 8, **caractérisé en ce que** le support élastique présente une épaisseur accrue dans la direction du bord du corps de base (11) par rapport à la zone entourant l'axe central (14).

10. Coussin de palier (1) selon l'une quelconque des revendications précédentes, **caractérisé en ce que** le corps de base (2) présente une gorge (9) sur la face supérieure dans la zone limitrophe et un rétreint inférieur (9.2) sur la face inférieure dans la zone limitrophe, où la garniture de palier (3) et le support élastique (4) présentent dans ces zones une épaisseur accrue par rapport aux zones limitrophes.
